# EUROPEAN PATENT APPLICATION

(11) **EP 4 460 049 A1**
(43) Date of publication of application: **06.11.2024**
(21) Application number: 21969303.3
(22) Date of filing: 27.12.2021
(51) Int. Cl.: H04W 4/06

(54) **METHODS FOR DETERMINING RESOURCE AND MONITORING MBS, APPARATUS, COMMUNICATION DEVICE, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Dehns Germany Partnerschaft mbB
(86) International application number: PCT/CN2021/141814
(87) International publication number: WO 2023/122918

(57) **Abstract**

Provided in an embodiment of the present disclosure is a method for determining a resource. The method is executed by a network device. The method comprises: determining a predetermined resource according to predetermined information, wherein the predetermined information indicates that a multicast and broadcast service (MBS) is to be provided or not to be provided to a first-type terminal, and the predetermined resource comprises at least one of the following: a common frequency resource (CFR), or an initial downlink bandwidth part (DL BWP) for use by the first-type terminal.

## Description

### TECHNICAL FIELD

The present disclosure relates to the technical field of wireless communication but is not limited to the technical field of wireless communication, and in particular, relates to a resource determining method and apparatus, a method and apparatus for monitoring an MBS, a communication device, and a storage medium.

### BACKGROUND

With the development of wireless communication networks, Reduced Capability (RedCap) terminals are introduced. RedCap terminals have the characteristics of low cost, low complexity, certain degree of coverage enhancement and power saving. In view of the above characteristics, the New Radio (NR) system needs to be transformed to meet the requirements of RedCap terminals. The configuration and transmission of the Physical Downlink Control Channel (PDCCH) and/or Physical Downlink Shared Channel (PDSCH) related to the Multicast and Broadcast Service (MBS) are both performed on the Common Frequency Resource (CFR).

In the related art, for RedCap terminals, there may be problems of high terminal power and/or low resource utilization due to unreasonable configuration of Bandwidth Part (BWP) and CFR.

### SUMMARY

Embodiments of the present disclosure disclose a resource determining method and apparatus, a method and apparatus for monitoring an MBS, a communication device and a storage medium.

According to a first aspect of an embodiment of the present disclosure, there is provided a resource determining method, where the method is performed by a network device, and the method includes:
determining a predetermined resource according to predetermined information;
where the predetermined information indicates: providing a multicast and broadcast service (MBS) to a terminal of a first type or not providing the MBS service to the terminal of the first type; and the predetermined resource includes at least one of: a common frequency resource (CFR), or an initial downlink bandwidth part (DL BWP) used by the terminal of the first type.

In an embodiment, determining the predetermined resource according to the predetermined information includes:
in response to providing the MBS to the terminal of the first type, determining that the CFR is included in the initial DL BWP;
   or,
in response to providing the MBS to the terminal of the first type, determining that the initial DL BWP and the CFR are within a bandwidth supported by the terminal of the first type.

In an embodiment, determining the predetermined resource includes:
determining a configuration operation for a CFR used by the terminal of the first type according to a time-frequency domain position relationship between the initial DL BWP and a CFR used by a terminal of a second type;
where the time-frequency domain position includes a time domain and/or frequency domain position; a capability of the terminal of the second type is different from a capability of the terminal of the first type; the CFR used by the terminal of the first type is included in the initial DL BWP, or the CFR used by the terminal of the first type and the initial DL BWP are within a bandwidth supported by the terminal of the first type.

In an embodiment, determining the configuration operation for the CFR used by the terminal of the first type according to the time-frequency domain position relationship between the initial DL BWP and the CFR used by the terminal of the second type includes:
in response to that the CFR used by the terminal of the second type is not included in the initial DL BWP, configuring the CFR used by the terminal of the first type;
   or,
in response to that the CFR used by the terminal of the second type is included in the initial DL BWP, not configuring the CFR used by the terminal of the first type.

According to a second aspect of an embodiment of the present disclosure, there is provided a method for monitoring an MBS service, where the method is performed by a terminal of a first type, and the method includes:
performing a processing operation for the MBS according to a configuration result of a predetermined resource;
where the predetermined resource includes at least one of: a CFR, or an initial DL BWP used by the terminal of the first type; the processing operation includes: monitoring the MBS or not monitoring the MBS.

In an embodiment, performing the processing operation for the MBS according to the configuration result of the predetermined resource includes:
in response to that the initial DL BWP includes the CFR, monitoring the MBS;
   or,
in response to that the initial DL BWP does not include the CFR, not monitoring the MBS;
   or,
in response to that the initial DL BWP and the CFR are within a bandwidth supported by the terminal of the first type, monitoring the MBS;
   or,
in response to that the initial DL BWP and the CFR are not within the bandwidth supported by the terminal of the first type, not monitoring the MBS.

In an embodiment, performing the processing operation for the MBS according to the configuration result of the predetermined resource includes:
in response to determining that a CFR used by the terminal of the first type is configured, monitoring the MBS based on the CFR used by the terminal of the first type;
where the CFR used by the terminal of the first type is included in the initial DL BWP, or the CFR used by the terminal of the first type and the initial DL BWP are within a bandwidth supported by the terminal of the first type.

In an embodiment, monitoring the MBS includes:
in response to that the terminal of the first type monitors predetermined information on the initial DL BWP and an opportunity for monitoring the MBS is reached, switching to monitor the MBS on the CFR.

In an embodiment, the method further includes:
in response to an end of monitoring the MBS on the CFR, switching to monitor the predetermined information on the initial DL BWP.

In an embodiment, the method further includes:
in response to a conflict between an opportunity for monitoring predetermined information and an opportunity for monitoring the MBS, determining a monitoring operation according to priority levels of monitoring the predetermined information and monitoring the MBS;
where the monitoring operation includes: monitoring the predetermined information or monitoring the MBS.

In an embodiment, determining the monitoring operation according to the priority levels of monitoring the predetermined information and monitoring the MBS includes:
in response to that the priority level of monitoring the predetermined information is higher than the priority level of monitoring the MBS, monitoring the predetermined information;
   or,
in response to that the priority level of monitoring the predetermined information is lower than the priority level of monitoring the MBS, monitoring the MBS.

In an embodiment, the method further includes:
determining the priority level of monitoring the MBS according to a type of the MBS.

According to a third aspect of the embodiments of the present disclosure, there is provided a resource determining apparatus, including:
a determining module, configured to determine a predetermined resource according to predetermined information;
where the predetermined information indicates: providing a multicast and broadcast service (MBS) to a terminal of a first type or not providing the MBS service to the terminal of the first type; and the predetermined resource includes at least one of: a common frequency resource (CFR), or an initial downlink bandwidth part (DL BWP) used by the terminal of the first type.

According to a fourth aspect of the embodiments of the present disclosure, there is provided an apparatus for monitoring an MBS service, where the apparatus includes:
a processing module, configured to perform a processing operation for the MB S according to a configuration result of a predetermined resource;
where the predetermined resource includes at least one of: a CFR, or an initial DL BWP used by a terminal; the processing operation includes: monitoring the MBS or not monitoring the MBS.

According to a fifth aspect of the embodiments of the present disclosure, there is provided a communication device, including:
a processor; and
a memory for storing an executable instruction of the processor;
where the processor is configured to implement the method described in any embodiment of the present disclosure when executing the executable instruction.

According to a sixth aspect of the embodiments of the present disclosure, there is provided a computer storage medium, the computer storage medium stores an executable program of a computer, and when the executable program is executed by a processor, the method described in any embodiment of the present disclosure is implemented.

In the embodiments of the present disclosure, the predetermined resource is determined according to the predetermined information; where the predetermined information indicates: providing the multicast and broadcast service (MBS) to the terminal of the first type or not providing the MBS service to the terminal of the first type; the predetermined resource includes at least one of the following: the common frequency resource (CFR), or the initial downlink bandwidth part (DL BWP) used by the terminal of the first type. In this way, since the predetermined resource is determined according to the predetermined information, the predetermined resource can be adapted to the situation of whether the network device provides the MBS to the terminal of the first type. Compared with the method of randomly configuring the predetermined resource, the present disclosure can configure the common frequency resource (CFR) and/or the initial DL BWP used by the terminal of the first type for the terminal of the first type, so as to realize resource sharing to improve network resource utilization, and/or reduce the power consumption brought by frequent resource switching and improve the battery life of the terminal.

### BRIEF DESCRIPTION OF THE DRAWINGS

FIG. 1 is a schematic structural diagram of a wireless communication system according to an exemplary embodiment.
FIG. 2 is a schematic flowchart of a resource determining method according to an exemplary embodiment.
FIG. 3 is a schematic flowchart of a resource determining method according to an exemplary embodiment.
FIG. 4 is a schematic flowchart of a resource determining method according to an exemplary embodiment.
FIG. 5 is a schematic flowchart of a resource determining method according to an exemplary embodiment.
FIG. 6 is a schematic flowchart of a resource determining method according to an exemplary embodiment.
FIG. 7 is a schematic flowchart of a resource determining method according to an exemplary embodiment.
FIG. 8 is a schematic flowchart of a method for monitoring an MBS according to an exemplary embodiment.
FIG. 9 is a schematic flowchart of a method for monitoring an MBS according to an exemplary embodiment.
FIG. 10 is a schematic flowchart of a method for monitoring an MBS according to an exemplary embodiment.
FIG. 11 is a schematic flowchart of a method for monitoring an MBS according to an exemplary embodiment.
FIG. 12 is a schematic flowchart of a method for monitoring an MBS according to an exemplary embodiment.
FIG. 13 is a schematic flowchart of a method for monitoring an MBS according to an exemplary embodiment.
FIG. 14 is a schematic flowchart of a method for monitoring an MBS according to an exemplary embodiment.
FIG. 15 is a schematic structural diagram of a resource determining apparatus according to an exemplary embodiment.
FIG. 16 is a schematic structural diagram of an apparatus for monitoring an MBS according to an exemplary embodiment.
FIG. 17 is a schematic structural diagram of a terminal according to an exemplary embodiment.
FIG. 18 is a block diagram of a base station according to an exemplary embodiment.

### DETAILED DESCRIPTION

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the present disclosure. Rather, they are merely examples of apparatuses and methods consistent with some aspects of the embodiments of the present disclosure as recited in the appended claims.

The terms used in the embodiments of the present disclosure are for the purpose of describing specific embodiments only, and are not intended to limit the embodiments of the present disclosure. As used in the embodiments of the present disclosure and the appended claims, the singular forms "a/an" and "the" are also intended to include the plural unless the context clearly indicates otherwise. It should also be understood that the term "and/or" as used herein refers to and includes any or all possible combinations of one or more of the associated listed items.

It should be understood that although the embodiments of the present disclosure may use the terms first, second, third, etc. to describe various information, the information should not be limited to these terms. These terms are only used to distinguish information of the same type from one another. For example, without departing from the scope of the embodiments of the present disclosure, first information may also be called second information, and similarly, second information may also be called first information. Depending on the context, the word "if" as used herein may be interpreted as "when" or "while" or "in response to a determination."

For the purpose of brevity and ease of understanding, the term "greater than" or "less than" is used herein when characterizing a size relationship. However, those skilled in the art can understand that the term "greater than" also covers the meaning of "greater than or equal to", and "less than" also covers the meaning of "less than or equal to".

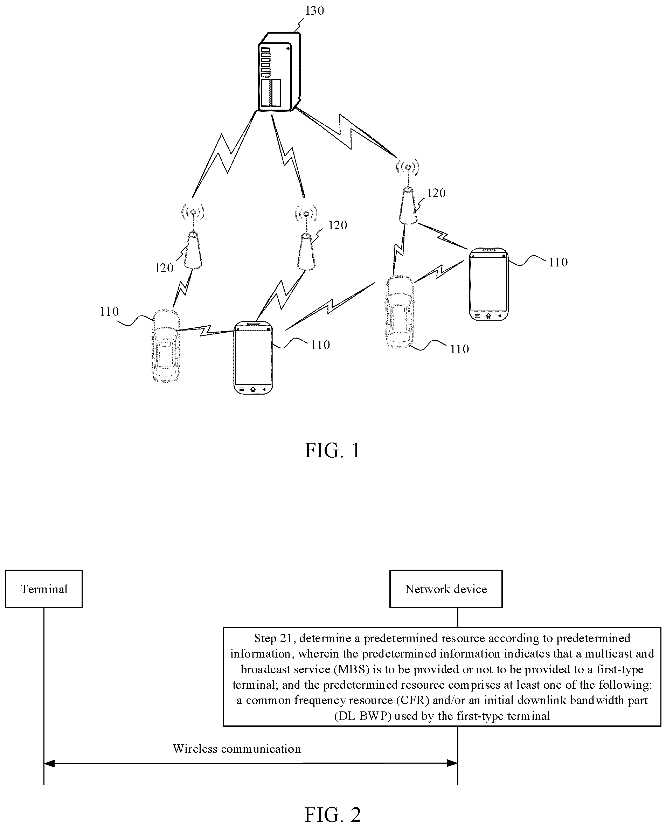

Referring to FIG. 1, which shows a schematic structural diagram of a wireless communication system provided by an embodiment of the present disclosure, the wireless communication system is a communication system based on mobile communication technology, and the wireless communication system may include: several user equipments 110 and several base stations 120.

The user equipment 110 may be a device that provides voice and/or data connectivity to the user. The user equipment 110 may communicate with one or more core networks via a Radio Access Network (RAN), and the user equipment 110 may be an Internet of Things user equipment, such as a sensor device, a mobile phone, and a computer with an Internet of Things user equipment, for example, may be a fixed, portable, pocket, hand-held, computer built-in, or vehicle-mounted apparatus. For example, it may be a Station (STA), a subscriber unit, a subscriber station, a mobile station, a mobile, a remote station, an access point, a remote user equipment (remote terminal), an access user equipment (access terminal), a user apparatus (user terminal), a user agent, a user device, or a user equipment. Alternatively, the user equipment 110 may also be a device of an unmanned aerial vehicle. Alternatively, the user equipment 110 may also be a vehicle-mounted device, for example, may be a trip computer with a wireless communication function, or a wireless user device connected externally to the trip computer. Alternatively, the user equipment 110 may also be a roadside device, for example, may be a street lamp, a signal lamp, or other roadside devices with a wireless communication function.

The base station 120 may be a network side device in a wireless communication system. The wireless communication system may be a fourth generation mobile communication technology (the 4th generation mobile communication, 4G) system, also known as a Long Term Evolution (LTE) system; or, the wireless communication system may also be a 5G system, also known as a new air interface system or 5G NR system. Alternatively, the wireless communication system may also be a next-generation system of the 5G system. Among them, the access network in the 5G system may be called New Generation-Radio Access Network (NG-RAN).

The base station 120 may be an evolved base station (eNB) adopted in the 4G system. Alternatively, the base station 120 may also be a base station (gNB) adopting a centralized and distributed architecture in the 5G system. When the base station 120 adopts the centralized and distributed architecture, it generally includes a central unit (CU) and at least two distributed units (DUs). The central unit is provided with a protocol stack of a Packet Data Convergence Protocol (PDCP) layer, a radio link layer control protocol (Radio Link Control, RLC) layer, a Media Access Control (MAC) layer; and a protocol stack of a Physical (PHY) layer is set in the distributed unit, and the embodiments of the present disclosure do not limit the specific implementation of the base station 120.

A wireless connection may be established between the base station 120 and the user equipment 110 through a wireless air interface. In different implementations, the wireless air interface is a wireless air interface based on the fourth-generation mobile communication network technology (4G) standard; or, the wireless air interface is a wireless air interface based on the fifth-generation mobile communication network technology (5G) standard, for example, the wireless air interface is a new air interface; or, the wireless air interface may also be a wireless air interface based on a next-generation mobile communication network technical standard based on 5G.

In some embodiments, an End to End (E2E) connection may also be established between the user equipments 110, such as vehicle to vehicle (V2V) communication, vehicle to Infrastructure (V2I) communication and vehicle to pedestrian (V2P) communication in vehicle to everything (V2X) communication, or other scenarios.

Here, the above user equipment may be regarded as the terminal device in the following embodiments.

In some embodiments, the foregoing wireless communication system may further include a network management device 130.

Several base stations 120 are connected to the network management device 130 respectively. The network management device 130 may be a core network device in the wireless communication system. For example, the network management device 130 may be a Mobility Management Entity (MME) in an Evolved Packet Core (EPC). Alternatively, the network management device may also be other core network devices, such as a Serving GateWay (SGW), a Public Data Network Gateway (PGW), a Policy and Charging Rules Function (PCRF) or a Home Subscriber Server (HSS), etc. The implementation form of the network management device 130 is not limited in the embodiments of the present disclosure.

In order to facilitate the understanding of those skilled in the art, the embodiments of the present disclosure list a plurality of implementations to clearly illustrate the technical solutions of the embodiments of the present disclosure. Those skilled in the art can understand that the plurality of embodiments provided by the embodiments of the present disclosure can be executed independently, or can be executed after combining with the methods of other embodiments in the embodiments of the present disclosure, or can also be executed together with some methods in other related art, or can also be executed together with some methods in other related art after combination; which is not limited in the embodiments of the present disclosure.

In order to better understand the technical solution described in any embodiment of the present disclosure, first, the application scenario in the related are is explained.

Because NR is designed for terminals with high-speed and low-delay characteristics, the design may not meet the requirements of RedCap terminals. Therefore, the NR system needs to be modified to meet the requirements of RedCap terminals.

In some embodiments, in order to meet the requirements of low cost and low complexity, the frequency range RF bandwidth of RedCap may be limited, for example, the RF bandwidth may be limited to 5MHz or 10MHz, or the size of the buffer of RedCap may be limited, thereby limiting the size of each received transmission block, etc. For the power saving characteristic, it can simplify the communication process, reduce the number of times RedCap users detect the downlink control channel, etc.

MBS is a multicast and broadcast service in the NR system. During the standardization process, CFR is defined to facilitate transmission of PDCCH and/or PDSCH related to MBS. The configuration and transmission of PDCCH and/or PDSCH related to MBS are both based on CFR.

In an embodiment, for a terminal in a Radio Resource Control (RRC) disconnected state, the terminal uses the frequency resource corresponding to the resource set CORESET#0 as the CFR. Here, the reason why CORESET#0 is used as the basis of CFR configuration is that the terminal resides on the BWP corresponding to this CORESET#0 when it is in the RRC disconnected state. Here, the RRC disconnected state includes an RRC idle state and an RRC inactive state.

In an embodiment, considering factors such as terminal bandwidth limitation and Time Division Duplexing (TDD), an initial UL BWP and/or DL BWP may be defined for the RedCap terminal. In an embodiment, RedCap may reside on this initial DL BWP. That is, the terminal may receive a paging message on this BWP.

In an embodiment, referring to Table 1, which shows a schematic diagram of a resource corresponding relationship, for the RedCap terminal, when the RedCap terminal is in the RRC disconnected state, the initial DL BWP detected by the RedCap terminal may not contain the CFR of the MBS, for example, Case 3 to Case 6 in Table 1.

**Table 1: Schematic diagram of resource corresponding relationship**

| | Initial DL BWP configured for RedCap terminal in RRC disconnected state | Initial DL BWP configured for non-RedCap terminal | CFR configured for MBS of non-RedCap terminal |
|---|---|---|---|
| Case1 | Frequency domain position corresponding to CORESET#0 | Frequency domain position corresponding to CORESET#0 | Frequency domain position corresponding to CORESET#0 |
| Case2 | | Resource configured by SIB1 | Frequency domain position corresponding to CORESET#0 |
| Case3 | | Resource configured by SIB1 | Resource configured by SIB1 |
| Case4 | Separate initial DL BWP (position other than frequency domain position corresponding to CORESET#0) | Frequency domain position corresponding to CORESET#0 | Frequency domain position corresponding to CORESET#0 |
| Case5 | | Resource configured by SIB1 | Frequency domain position corresponding to CORESET#0 |
| Case6 | | Resource configured by SIB1 | Resource configured by SIB1 |

As shown in FIG. 2, a resource determining method is provided in this embodiment, where the method is executed by a network device, and the method includes the following steps.

In step 21, a predetermined resource is determined according to predetermined information;
where the predetermined information indicates: providing a multicast and broadcast service (MBS) to a terminal of a first type or not providing the MBS service to the terminal of the first type; the predetermined resource includes at least one of the following: a common frequency resource (CFR), or an initial downlink bandwidth part (DL BWP) used by the terminal of the first type.

Here, the terminals involved in the present disclosure may be, but not limited to, mobile phones, wearable devices, vehicle-mounted terminals, Road Side Units (RSUs), smart home terminals, industrial sensing devices, and/or medical devices. In the present disclosure, the terminal of the first type may be a RedCap terminal (RedCap UE), for example, an electric meter and a water meter. The second type of terminal in the present disclosure may be a non-RedCap terminal (Non-RedCap UE). The non-RedCap terminal here may be other terminals except the RedCap terminal. The capabilities of the terminal of the first type and the second type of terminal are different. Here, the different capabilities may be different supported bandwidths, delays, and powers. It should be noted that the terminal of the first type is a terminal with reduced capability of the second type of terminal. In the embodiments of the present disclosure, the terminal may be a terminal in an RRC disconnected state. The RRC disconnected state includes an RRC idle state and an RRC inactive state. The terminal being in the RRC disconnected state may be that the terminal is in the RRC idle state or the RRC inactive state.

The network device involved in the present disclosure may be an access device for a terminal to access a network. Here, the network device may be various types of base stations, for example, a base station of a third-generation mobile communication (3G) network, a base station of a fourth-generation mobile communication (4G) network, a base station of a fifth-generation mobile communication (5G) network or other evolved base stations. It should be noted that the network device in the present disclosure is not limited to the base station in the access network, and may also be a communication node in the core network, which is not limited here. For example, the determination and/or configuration operations in the present disclosure may also be performed by the network device in the core network.

In an embodiment, the network device acquires predetermined information, where the predetermined information may be determined according to subscription information of the terminal of the first type; in response to the predetermined information indicating to provide MBS to the terminal of the first type, the predetermined resource is determined, where the predetermined resource includes the CFR and the initial DL BWP used by the terminal of the first type. The CFR is included in the initial DL BWP and/or the initial DL BWP and CFR are within the bandwidth supported by the terminal of the first type. It should be noted that, in the present disclosure, determining the predetermined resource may include: configuring the predetermined resource, or determining the predetermined resource may be configuring the predetermined resource.

Here, the CFR may be used by the terminal of the first type to configure and transmit the PDCCH and/or PDSCH related to the MBS on the CFR. The initial DL BWP may be used by the terminal of the first type to monitor the paging message on the initial DL BWP.

In the present disclosure, the bandwidth may refer to a bandwidth range, which is not limited here.

It should be noted that if the CFR is included in the initial DL BWP and the bandwidth range of the initial DL BWP is within the bandwidth range supported by the terminal, it can be determined that the CFR is within the bandwidth range supported by the terminal. Or, if the CFR is not included in the initial DL BWP, the CFR may or may not be within the bandwidth range supported by the terminal. Or, if the CFR is not included in the initial DL BWP and the initial DL BWP is within the bandwidth range supported by the terminal, the CFR may or may not be within the bandwidth range supported by the terminal. The initial DL BWP and CFR being within the bandwidth supported by the terminal may be that the frequency ranges of the initial DL BWP and CFR are not greater than the bandwidth range supported by the terminal; that is, the frequency range of the initial DL BWP is not greater than the bandwidth range supported by the terminal, and the frequency range of CFR is not greater than the bandwidth range supported by the terminal. For example, the frequency range corresponding to CFR is *a* to *b,* and the frequency range corresponding to the initial DL BWP is *c* to *d*, where *a<b<c<d*, the bandwidth supported by the terminal is X; if the difference between *b* and *a* is less than X, then CFR is within the bandwidth supported by the terminal, if the difference between *b* and *a* is greater than X, then CFR is not within the bandwidth supported by the terminal; if the difference between *d* and c is less than X, then the initial DL BWP is within the bandwidth supported by the terminal, if the difference between *d* and *c* is greater than X, the initial DL BWP is not within the bandwidth supported by the terminal; if the difference between *d* and *a* is less than X, both CFR and the initial DL BWP are within the terminal bandwidth supported by the terminal. The terminal here may be the terminal of the first type, for example, the terminal of the first type is a RedCap terminal.

In an embodiment, the network device may configure the position of the time-frequency domain resource of CFR to be within the position of the time-frequency domain resource of the initial DL BWP, where the time-frequency domain resource includes a time domain and/or frequency domain resource.

Exemplarily, the position corresponding to the time-frequency domain resource of CFR is a first resource block, and the position corresponding to the time-frequency domain resource of the initial DL BWP is a second resource block, where the second resource block covers the first resource block. Here, it may be that the second resource block covers the first resource block in the time domain and/or the frequency domain, which is not limited in the present disclosure. It should be noted that if the position of the time-frequency domain resource of CFR is within the position of the time-frequency domain resource of the initial DL BWP, the second resource block may completely cover the first resource block. Here, the first resource block may be a sub-resource block of the second resource block, where the second resource block may include a plurality of sub-resource blocks.

In an embodiment, the network device may configure the sum of the bandwidth ranges of the CFR and the initial DL BWP to be within the bandwidth range supported by the terminal of the first type. Here, the terminal of the first type may be a RedCap terminal.

Exemplarily, the frequency range of the CFR corresponds to the first bandwidth, and the frequency range of the initial DL BWP corresponds to the second bandwidth, where both the first bandwidth and the second bandwidth are less than or equal to the bandwidth supported by the terminal of the first type. In an embodiment, the first bandwidth may be smaller than the second bandwidth. Here, the terminal of the first type may be a RedCap terminal; the initial DL BWP may be sent to the terminal of the first type through a Master Information Block (MIB).

It should be noted that, in the related art, the bandwidth corresponding to the frequency range of the initial DL BWP sent through the MIB can only be smaller than the bandwidth supported by the terminal, but the bandwidth corresponding to the frequency range of the initial DL BWP sent through the System Information Block (SIB) may be larger than the bandwidth supported by the terminal or may be smaller than or equal to the bandwidth supported by the terminal.

In an embodiment, the network device determines whether to configure or not to configure the predetermined resource according to the predetermined information; where the predetermined information indicates: to provide the MBS to the terminal of the first type or not provide the MBS to the terminal of the first type.

In an embodiment, in response to providing the MBS to the terminal of the first type, it is configured that the initial DL BWP includes CFR and/or configured that the initial DL BWP and CFR are within the bandwidth supported by the terminal of the first type. Or, in response to determining not to provide MBS to the terminal of the first type, the network device does not configure CFR, or the initial DL BWP configured by the network device does not contain CFR, or the sum of frequency domain resource ranges of the initial DL BWP and CFR configured by the network device is greater than the bandwidth range supported by the terminal of the first type.

In an embodiment, the initial DL BWP and CFR have been configured before performing step 21, where the configured CFR is the CFR configured for the non-RedCap terminal. In an embodiment, in response to that the position of the time-frequency domain of the configured CFR is not included in the position of the time-frequency domain of the initial DL BWP, the CFR used by the terminal of the first type is configured; or, in response to that the position of the time-frequency domain of the configured CFR is included in the position of the time-frequency domain of the initial DL BWP, the CFR used by the terminal of the first type is no longer configured.

Exemplarily, if the CFR configured for the non-RedCap terminal is CORESET#0, and the configured initial DL BWP is also CORESET#0, the position of the time-frequency domain of the configured CFR is included in the position of the time-frequency domain of the initial DL BWP. Or, if the CFR configured for the non-RedCap terminal is SIB 1-configured, and the configured initial DL BWP is CORESET#0, the position of the time-frequency domain of the configured CFR is not included in the position of the time-frequency domain of the initial DL BWP.

In an embodiment, a predetermined resource is configured; and configuration information indicating the predetermined resource is sent to the terminal of the first type, where the configuration information is used to indicate the terminal of the first type to execute a processing operation for the MBS based on the configuration information. Exemplarily, in response to the initial DL BWP including CFR, the terminal of the first type may be instructed to monitor MBS; or, in response to the initial DL BWP not including CFR, the terminal of the first type may be indicated not to monitor MBS; or, in response to the sum of the frequency domain resource ranges of the initial DL BWP and the CFR being less than or equal to the bandwidth range supported by the terminal of the first type, the terminal of the first type may be instructed to monitor the MBS; or, in response to the sum of the frequency domain resource ranges of the initial DL BWP and the CFR being greater than the bandwidth range supported by the terminal of the first type, the terminal of the first type may be indicated to not monitor the MBS. Here, the terminal of the first type may be a terminal in a Radio Resource Control (RRC) disconnected state.

In an embodiment of the present disclosure, the predetermined resource is determined according to the predetermined information; where the predetermined information indicates to: provide the multicast and broadcast service (MBS) to the terminal of the first type or not provide the MBS service to the terminal of the first type; the predetermined resource includes at least one of the following: the common frequency resource (CFR) and/or the initial downlink bandwidth part (DL BWP) used by the terminal of the first type. In this way, since the predetermined resource is determined according to the predetermined information, the predetermined resource can be adapted to the situation of whether the network device provides MBS to the terminal of the first type. Compared with the way of randomly configuring the predetermined resource, the present disclosure can configure the common frequency resource (CFR) and/or the initial downlink bandwidth part (DL BWP) used by the terminal of the first type for the terminal of the first type, so as to realize resource sharing to improve network resource utilization, and/or reduce power consumption caused by frequent resource switching, and improve battery life of the terminal.

It should be noted that those skilled in the art can understand that the methods provided in the embodiments of the present disclosure may be executed independently, or together with some methods in the embodiments of the present disclosure or some methods in the related art.

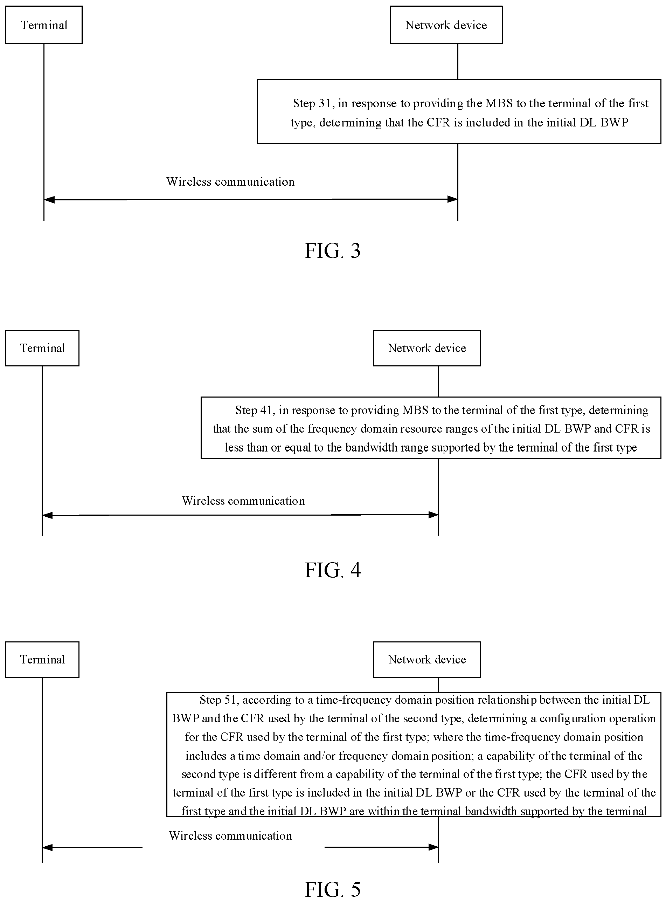

As shown in FIG. 3, a resource determining method is provided in this embodiment, where the method is executed by a network device, and the method includes the following steps.

In step 31, in response to providing the MBS to the terminal of the first type, it is determined that the CFR is included in the initial DL BWP.

Here, the terminal of the first type is a Red Cap terminal. The initial DL BWP is the initial DL BWP used by the terminal of the first type.

In the present disclosure, determining that the CFR is included in the initial DL BWP may include configuring the CFR to be included in the initial DL BWP.

It should be noted that if it is determined not to provide MBS to the terminal of the first type, the network device does not configure CFR, or the configured initial DL BWP may not include CFR.

In an embodiment, in response to providing MBS to the terminal of the first type, the predetermined resource is configured, where the predetermined resource includes at least one of the following: CFR or initial DL BWP used by the terminal of the first type; CFR is included in the initial DL BWP; configuration information indicating the predetermined resource is sent to the terminal of the first type. The configuration information may instruct the terminal of the first type to perform a processing operation for the MBS based on the configuration information. Exemplarily, in response to the initial DL BWP including the CFR, the terminal of the first type is instructed to monitor the MBS; or in response to the initial DL BWP not including the CFR, the terminal of the first type is instructed not to monitor the MBS.

It should be noted that those skilled in the art can understand that the methods provided in the embodiments of the present disclosure may be executed independently, or together with some methods in the embodiments of the present disclosure or some methods in the related art.

As shown in FIG. 4, a resource determining method is provided in this embodiment, where the method is executed by a network device, and the method includes the following steps.

In step 41, in response to providing MBS to the terminal of the first type, it is determined that the sum of the frequency domain resource ranges of the initial DL BWP and CFR is less than or equal to the bandwidth range supported by the terminal of the first type.

Here, the terminal of the first type is a Red Cap terminal. The initial DL BWP is the initial DL BWP used by the terminal of the first type.

In the present disclosure, it is determined that the sum of the frequency domain resource ranges of the initial DL BWP and CFR is less than or equal to the bandwidth range supported by the terminal of the first type (that is to say, the sum of the frequency domain resource ranges of DL BWP and CFR is within the bandwidth supported by the terminal of the first type), then it may include configuring the initial DL BWP and CFR within the bandwidth supported by the terminal of the first type.

It should be noted that if it is determined not to provide MBS to the terminal of the first type, the network device does not configure CFR, or the sum of the frequency domain resource ranges of the configured initial DL BWP and CFR is greater than the bandwidth range supported by the terminal of the first type (that is, the sum of the frequency domain resource ranges of the configured initial DL BWP and CFR is not within the bandwidth supported by the terminal of the first type).

In an embodiment, in response to determining that MBS is provided to the terminal of the first type, a predetermined resource is configured, where the predetermined resource includes at least one of the following: CFR or an initial DL BWP used by the terminal of the first type; the initial DL BWP and CFR are within the bandwidth supported by the terminal of the first type; configuration information indicating the predetermined resource is sent to the terminal of the first type. The configuration information may instruct the terminal of the first type to perform a processing operation for the MBS based on the configuration information. Exemplarily, in response to the sum of the frequency domain resource ranges of the initial DL BWP and CFR being within the terminal bandwidth range supported by the terminal, the terminal of the first type is instructed to monitor MBS; or, in response to the sum of the frequency domain resource ranges of the initial DL BWP and CFR being not within the terminal bandwidth range supported by the terminal, the terminal of the first type is instructed not to monitor the MBS.

It should be noted that those skilled in the art can understand that the methods provided in the embodiments of the present disclosure may be executed independently, or together with some methods in the embodiments of the present disclosure or some methods in the related art.

As shown in FIG. 5, an embodiment of the present disclosure provides a resource determining method, where the method is executed by a network device, and the method includes the following steps.

In step 51, according to a time-frequency domain position relationship between the initial DL BWP and the CFR used by the terminal of the second type, a configuration operation for the CFR used by the terminal of the first type is determined.

The time-frequency domain position includes a time domain and/or frequency domain position; a capability of the terminal of the second type is different from a capability of the terminal of the first type; the CFR used by the terminal of the first type is included in the initial DL BWP or the CFR used by the terminal of the first type and the initial DL BWP are within the terminal bandwidth supported by the terminal.

Here, the terminal of the first type is a RedCap terminal, and the second type of terminal is a non-RedCap terminal.

Here, the CFR used by the second type of terminal may be a resource applied to the MBS configured for the non-RedCap terminal.

Here, the initial DL BWP may be a resource configured for the RedCap terminal.

In an embodiment, before step 21 is performed, the network device configures the initial DL BWP for the RedCap terminal and the CFR used by the terminal of the second type. According to the position relationship in the time-frequency domain between the configured initial DL BWP for the RedCap terminal and CFR used by the terminal of the second type, the configuration operation for the CFR used by the terminal of the first type is determined. Here, the configuration operation includes configuring a CFR used by the terminal of the first type or not configuring a CFR used by the terminal of the first type.

In an embodiment, if the time-frequency domain position of the CFR used by the second type of terminal is not included in the time-frequency domain position of the initial DL BWP, the network device configures the CFR used by the terminal of the first type; or, if the time-frequency domain position of the CFR used by the second type of terminal is included in the time-frequency domain position of the initial DL BWP, the network device no longer configures the CFR used by the terminal of the first type.

It should be noted that those skilled in the art can understand that the methods provided in the embodiments of the present disclosure may be executed independently, or together with some methods in the embodiments of the present disclosure or some methods in the related art.

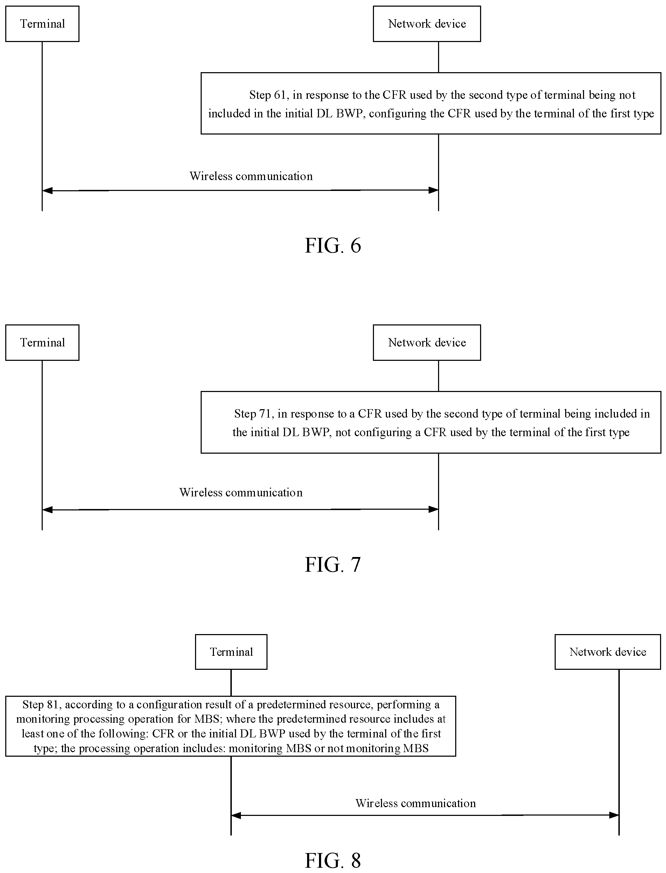

As shown in FIG. 6, an embodiment of the present disclosure provides a resource determining method, where the method is executed by a network device, and the method includes the following steps.

In step 61, in response to the CFR used by the second type of terminal being not included in the initial DL BWP, the CFR used by the terminal of the first type is configured.

Here, the terminal of the first type is a RedCap terminal, and the second type of terminal is a non-RedCap terminal. The initial DL BWP may be the initial DL BWP resource configured for the RedCap terminal.

In an embodiment, the CFR used by the terminal of the first type is included in the initial DL BWP, or the CFR used by the terminal of the first type and the initial DL BWP are within the terminal bandwidth supported by the terminal.

In an embodiment, the position corresponding to the time-frequency domain resource of the CFR used by the second type of terminal is the first resource block, and the position corresponding to the time-frequency domain resource of the initial DL BWP is the second resource block. If the second resource block does not cover the first resource block, the time-frequency domain position of the CFR used by the second type of terminal is not included in the time-frequency domain position of the initial DL BWP. Here, it may be that the second resource block does not cover the first resource block in the time domain and/or the frequency domain, which is not limited in the present disclosure. Here, the fact that the time-frequency domain position of the CFR used by the second type of terminal is not included in the time-frequency domain position of the initial DL BWP may mean that the second resource block does not completely cover the first resource block.

In an embodiment, in response to the time-frequency domain position of the CFR used by the second type of terminal is not contained within the time-frequency domain position of the initial DL BWP, the CFR used by the terminal of the first type is configured. The configuration information is sent to the terminal of the first type, where the configuration information includes the CFR used by the terminal of the first type; the configuration information is used to instruct the terminal of the first type to perform a processing operation for the MBS based on the configuration information. Exemplarily, in response to the initial DL BWP including CFR, the terminal of the first type is instructed to monitor MBS; or, in response to the initial DL BWP not including CFR, the terminal of the first type is instructed not to monitor MBS; or, in response to the sum of frequency domain resource ranges of the initial DL BWP and CFR being within the terminal bandwidth range supported by the terminal, the terminal of the first type is instructed to monitor MBS; or, in response to the sum of the frequency domain resource ranges of the initial DL BWP and CFR not being within the terminal bandwidth range supported by the terminal, the terminal of the first type is instructed to not monitor MBS.

It should be noted that those skilled in the art can understand that the methods provided in the embodiments of the present disclosure may be executed independently, or together with some methods in the embodiments of the present disclosure or some methods in the related art.

As shown in FIG. 7, an embodiment of the present disclosure provides a resource determining method, where the method is executed by a network device, and the method includes the following steps.

In step 71, in response to a CFR used by the second type of terminal being included in the initial DL BWP, a CFR used by the terminal of the first type is not configured.

Here, the terminal of the first type is a RedCap terminal, and the second type of terminal is a non-RedCap terminal. The initial DL BWP may be a resource configured for the RedCap terminal.

In an embodiment, the CFR used by the terminal of the first type is included in the initial DL BWP, or the CFR used by the terminal of the first type and the initial DL BWP are within the terminal bandwidth supported by the terminal.

In an embodiment, the position corresponding to the time-frequency domain resource of the CFR used by the second type of terminal is the first resource block, and the position corresponding to the time-frequency domain resource of the initial DL BWP is the second resource block. If the second resource block covers the first resource block, the time-frequency domain position of the CFR used by the second type of terminal is included in the time-frequency domain position of the initial DL BWP. Here, it may be that the second resource block covers the first resource block in the time domain and/or the frequency domain, which is not limited in the present disclosure. Here, the time-frequency domain position of the CFR used by the second type of terminal being included in the time-frequency domain position of the initial DL BWP may mean that the second resource block completely covers the first resource block.

It should be noted that those skilled in the art can understand that the methods provided in the embodiments of the present disclosure may be executed independently, or together with some methods in the embodiments of the present disclosure or some methods in the related art.

As shown in FIG. 8, an embodiment of the present disclosure provides a method for monitoring an MBS, where the method is performed by a terminal of a first type, and the method includes the following steps.

In step 81, according to a configuration result of a predetermined resource, a monitoring processing operation for MBS is performed.

The predetermined resource includes at least one of the following: CFR or the initial DL BWP used by the terminal of the first type; the processing operation includes: monitoring MBS or not monitoring MBS.

Here, the terminals involved in the present disclosure may be, but not limited to, mobile phones, wearable devices, vehicle-mounted terminals, Road Side Units (RSUs), smart home terminals, industrial sensing devices, and/or medical devices. In the present disclosure, the terminal of the first type may be a RedCap terminal, for example, an electric meter, a water meter, and the like. The second type of terminal in the present disclosure may be a non-RedCap terminal. The non-RedCap terminal here may be a terminal other than the RedCap terminal. The capabilities of the terminal of the first type and the second type of terminal are different. The different capabilities here may be different supported bandwidth, delay, and power. It should be noted that the terminal of the first type is a terminal with reduced capability of the second type of terminal. In the embodiment of the present disclosure, the terminal may be a terminal in an RRC disconnected state. The RRC disconnected state includes an RRC idle state and an RRC inactive state. The terminal being in the RRC disconnected state may be that the terminal is in the RRC idle state or the RRC inactive state.

The network device involved in the present disclosure may be an access device for a terminal to access a network. Here, the network device may be various types of base stations, for example, a base station of a third-generation mobile communication (3G) network, a base station of a fourth-generation mobile communication (4G) network, a base station of a fifth-generation mobile communication (5G) network or other evolved base stations. It should be noted that the network device in the present disclosure is not limited to the base station in the access network, and may also be a communication node in the core network, which is not limited here. For example, the configuration operation in the present disclosure may also be performed by the network device in the core network.

In an embodiment, the terminal of the first type receives configuration information sent by the network device, where the configuration information indicates a predetermined resource.

In an embodiment, the configuration information is determined by the network device according to the predetermined information; where the predetermined information may be determined according to subscription information of the terminal of the first type; where the predetermined resource includes CFR and an initial DL BWP used by the terminal of the first type, CFR is included in the initial DL BWP and/or the initial DL BWP and CFR are within the bandwidth supported by the terminal of the first type. It should be noted that, in the present disclosure, determining the predetermined resource may include: configuring the predetermined resource, or determining the predetermined resource may be configuring the predetermined resource.

Here, the configuration and transmission of the PDCCH and/or PDSCH related to the MBS are performed based on the CFR. The terminal of the first type can monitor the paging message on the initial DL BWP.

It should be noted that if the CFR is included in the initial DL BWP and the bandwidth range of the initial DL BWP is within the bandwidth range supported by the terminal, it can be determined that the CFR is within the bandwidth range supported by the terminal. Alternatively, if the CFR is not included in the initial DL BWP, the CFR may or may not be within the bandwidth supported by the terminal. Or, if the CFR is not included in the initial DL BWP and the initial DL BWP is within the bandwidth supported by the terminal, the CFR may or may not be within the bandwidth supported by the terminal. The initial DL BWP and CFR within the bandwidth supported by the terminal may be that the frequency ranges of the initial DL BWP and CFR are not greater than the bandwidth supported by the terminal; that is, the frequency range of the initial DL BWP is not greater than the bandwidth supported by the terminal, and the frequency range of CFR is not greater than the bandwidth supported by the terminal. For example, the frequency range corresponding to CFR is *a* to *b,* and the frequency range corresponding to the initial DL BWP is *c* to *d,* where *a<b<c<d*, the bandwidth supported by the terminal is X; if the difference between *b* and *a* is less than X, then the CFR is within the bandwidth supported by the terminal, if the difference between *b* and *a* is greater than X, then the CFR is not within the bandwidth supported by the terminal; if the difference between *d* and *c* is less than X, then the initial DL BWP is within the bandwidth supported by the terminal, if the difference between *d* and *c* is greater than X, the initial DL BWP is not within the bandwidth supported by the terminal; if the difference between *d* and *a* is less than X, both CFR and initial DL BWP are within the terminal bandwidth supported by the terminal. The terminal here may be the terminal of the first type, for example, the terminal of the first type is a RedCap terminal.

In an embodiment, the position of the time-frequency domain resource of the CFR is within the position of the time-frequency domain resource of the initial DL BWP, where the time-frequency domain resource includes a time domain and/or frequency domain resource.

Exemplarily, the position corresponding to the time-frequency domain resource of the CFR is the first resource block, and the position corresponding to the time-frequency domain resource of the initial DL BWP is the second resource block, where the second resource block covers the first resource block. Here, it may be that the second resource block covers the first resource block in the time domain and/or the frequency domain, which is not limited in the present disclosure. It should be noted that if the position of the time-frequency domain resource of the CFR is within the position of the time-frequency domain resource of the initial DL BWP, the second resource block may completely cover the first resource block. Here, the first resource block may be a sub-resource block of the second resource block, where the second resource block may include a plurality of sub-resource blocks.

In an embodiment, the sum of the bandwidth ranges of the CFR and the initial DL BWP is within the bandwidth range supported by the terminal of the first type. Here, the terminal of the first type may be a RedCap terminal. When the terminal of the first type determines that the sum of the bandwidth ranges of CFR and the initial DL BWP is within the bandwidth range supported by the terminal of the first type, it is determined that the network device configures that the sum of the bandwidth ranges of CFR and the initial DL BWP is within the bandwidth range supported by the terminal of the first type.

Exemplarily, the frequency range of the CFR corresponds to the first bandwidth, and the frequency range of the initial DL BWP corresponds to the second bandwidth, where both the first bandwidth and the second bandwidth are less than or equal to the bandwidth supported by the terminal of the first type. In an embodiment, the first bandwidth may be smaller than the second bandwidth. Here, the terminal of the first type may be a RedCap terminal; the initial DL BWP may be sent to the terminal of the first type through a Master Information Block (MIB).

It should be noted that, in the related art, the bandwidth corresponding to the frequency range of the initial DL BWP sent through the MIB can only be smaller than the bandwidth supported by the terminal, but the bandwidth corresponding to the frequency range of the initial DL BWP sent through the System Information Block (SIB) may be larger than the bandwidth supported by the terminal or may be smaller than or equal to the bandwidth supported by the terminal.

In an embodiment, the terminal of the first type may determine whether to perform the monitoring processing operation for the MBS according to the received CFR and initial DL BWP. That is, in response to determining the predetermined resource configuration of the network device according to the received CFR and initial DL BWP, it is determined whether to receive the MBS provided by the network device.

In an embodiment, in response to the terminal of the first type determining that the network device configures the initial DL BWP to include CFR and/or configures the sum of the bandwidth ranges of the initial DL BWP and CFR to be within the bandwidth range supported by the terminal of the first type, the terminal of the first type determines that the network device provides the MBS to the terminal of the first type. Or, in response to the determination of the terminal of the first type: the network device does not provide MBS to the terminal of the first type, the network device does not configure CFR, or the initial DL BWP configured by the network device may not contain CFR, or, the network device configures the sum of the bandwidth ranges of the initial DL BWP and CFR to be not within the bandwidth range supported by the terminal of the first type, and the terminal of the first type determines that the network device does not provide the MBS to the terminal of the first type. Correspondingly, the terminal of the first type may determine not to perform the monitoring processing operation for MBS; that is, the terminal of the first type may determine that the network device does not provide the terminal of the first type with the MBS service. In an embodiment, the initial DL BWP and CFR have been configured before performing step 21, where the configured CFR is the CFR configured for the non-RedCap terminal. In an embodiment, in response to the position of the time-frequency domain of the configured CFR not being included in the position of the time-frequency domain of the initial DL BWP, the terminal of the first type may receive the CFR configured by the network device and used by the terminal of the first type; or, in response to the position of the time-frequency domain of the configured CFR being included in the position of the time-frequency domain of the initial DL BWP, the terminal of the first type cannot receive the CFR configured by the network device and used by the terminal of the first type.

Exemplarily, if the configured CFR for the non-RedCap terminal is CORESET#0, and the configured initial DL BWP is also CORESET#0, the position of the time-frequency domain of the configured CFR is included in the position of the time-frequency domain of the initial DL BWP. Or, if the configured CFR for the non-RedCap terminal is SIB 1-configured, and the configured initial DL BWP is CORESET#0, the position of the time-frequency domain of the configured CFR is not included in the position of the time-frequency domain of the initial DL BWP.

In the present disclosure, the configuration result may be determined according to configuration information.

In an embodiment, the network device configures a predetermined resource; and sends configuration information indicating the predetermined resource to the terminal of the first type. After receiving the configuration information, the terminal of the first type may perform a processing operation for the MBS based on the configuration information. Exemplarily, in response to the initial DL BWP including CFR, the terminal of the first type monitors MBS; or, in response to the initial DL BWP not including CFR, the terminal of the first type does not monitor MBS; or, in response to the initial DL BWP and CFR being within the bandwidth supported by the terminal, the terminal of the first type monitors the MBS; or, in response to the initial DL BWP and CFR being not within the bandwidth supported by the terminal, the terminal of the first type does not monitor the MBS. Here, the terminal of the first type may be a terminal in a Radio Resource Control (RRC) disconnected state.

It should be noted that those skilled in the art can understand that the methods provided in the embodiments of the present disclosure may be executed independently, or together with some methods in the embodiments of the present disclosure or some methods in the related art.

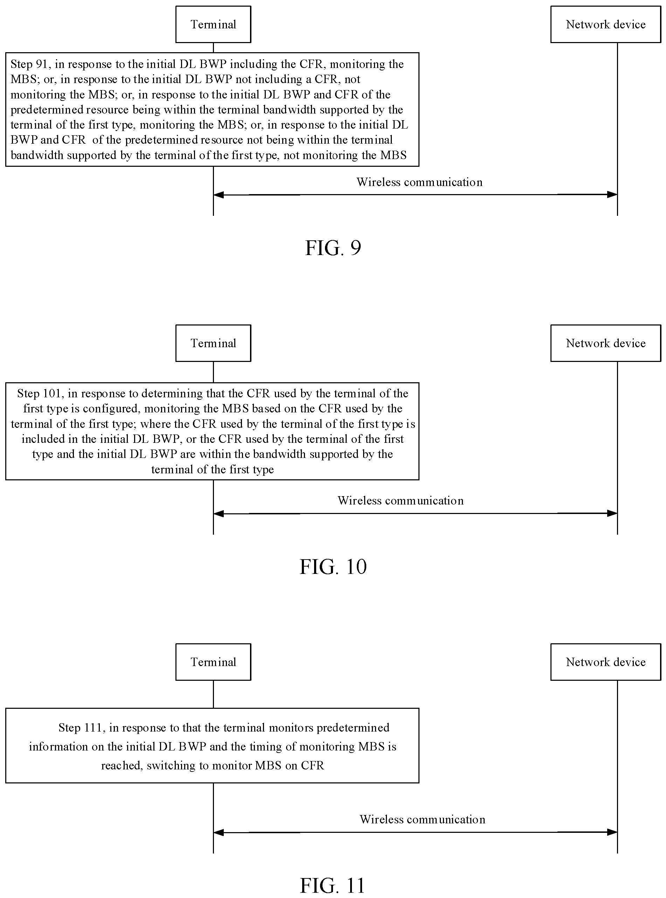

As shown in FIG. 9, an embodiment of the present disclosure provides a method for monitoring MBS, where the method is performed by a terminal of a first type, and the method includes the following steps.

In step 91, in response to the initial DL BWP including the CFR, the MBS is monitored;
or,
in response to the initial DL BWP not including a CFR, the MBS is not monitored;
   or,
in response to the initial DL BWP and CFR being within the bandwidth supported by the terminal of the first type, the MBS is monitored;
   or,
in response to the initial DL BWP and CFR not being within the bandwidth supported by the terminal of the first type, the MBS is not monitored.

Here, the initial DL BWP is the initial DL BWP used by the terminal of the first type.

In an embodiment, the terminal of the first type receives configuration information sent by the network device, where the configuration information indicates a predetermined resource. The predetermined resource may include a CFR, and in response to determining that the CFR is configured, the terminal of the first type monitors the MBS; where the CFR is included in the initial DL BWP or the CRF and the initial DL BWP are within the bandwidth supported by the terminal. Here, the CFR is the CFR configured for the terminal of the first type. The terminal of the first type may be a RedCap terminal.

In an embodiment, the terminal of the first type may receive configuration information sent by the network device, where the configuration information indicates a predetermined resource. The predetermined resource may include CFR and/or initial DL BWP, and the terminal of the first type compares the initial DL BWP and CFR. In an embodiment, in response to the initial DL BWP containing the predetermined resource, the terminal of the first type monitors the MBS; or in response to the initial DL BWP not containing the predetermined resource, the terminal of the first type does not monitor the MBS.

In an embodiment, the terminal of the first type may receive configuration information sent by the network device, where the configuration information indicates a predetermined resource. The predetermined resource includes CFR and/or initial DL BWP, and the terminal of the first type compares the bandwidth corresponding to the initial DL BWP, the bandwidth corresponding to CFR, and the bandwidth supported by the terminal of the first type. In an embodiment, in response to the bandwidths of the initial DL BWP and CFR being within the bandwidth supported by the terminal of the first type, the terminal of the first type monitors MBS; or, in response to the bandwidths of the initial DL BWP and CFR being not within the bandwidth supported by the terminal of the first type, the terminal of the first type does not monitor the MBS.

It should be noted that those skilled in the art can understand that the methods provided in the embodiments of the present disclosure may be executed independently, or together with some methods in the embodiments of the present disclosure or some methods in the related art.

As shown in FIG. 10, an embodiment of the present disclosure provides a method for monitoring MBS, where the method is performed by a terminal of a first type, and the method includes the following steps.

In step 101, in response to determining that the CFR used by the terminal of the first type is configured, the MBS is monitored based on the CFR used by the terminal of the first type;
where the CFR used by the terminal of the first type is included in the initial DL BWP, or the CFR used by the terminal of the first type and the initial DL BWP are within the bandwidth supported by the terminal of the first type.

Here, the terminal of the first type is a RedCap terminal in an RRC disconnected state.

Here, the terminal of the first type determines that the CFR used by the terminal of the first type is configured, that is, the time-frequency domain position of the CFR used by the terminal of the second type is not included in the time-frequency domain position of the initial DL BWP.

In an embodiment, the position corresponding to the time-frequency domain resource of the CFR used by the second type of terminal is the first resource block, and the position corresponding to the time-frequency domain resource of the initial DL BWP is the second resource block. If the second resource block does not cover the first resource block, the time-frequency domain position of the CFR used by the second type of terminal is not included in the time-frequency domain position of the initial DL BWP. Here, it may be that the second resource block does not cover the first resource block in the time domain and/or the frequency domain, which is not limited in the present disclosure. Here, the fact that the time-frequency domain position of the CFR used by the second type of terminal is not included in the time-frequency domain position of the initial DL BWP may mean that the second resource block does not completely cover the first resource block.

In an embodiment, in response to the time-frequency domain position of the CFR used by the second type of terminal being not contained in the time-frequency domain position of the initial DL BWP, the network device configures the CFR used by the terminal of the first type. The terminal of the first type receives the configuration information sent by the network device, and the configuration information includes the CFR used by the terminal of the first type; after receiving the configuration information, the terminal of the first type can execute the processing operation for MBS based on the configuration information. Exemplarily, in response to the initial DL BWP including CFR, the terminal of the first type monitors MBS; or, in response to the initial DL BWP not including CFR, the terminal of the first type does not monitor MBS; or, in response to the initial DL BWP and CFR being within the bandwidth supported by the terminal of the first type, the terminal of the first type monitors MBS; or, in response to the initial DL BWP and CFR not being within the bandwidth supported by the terminal of the first type, the terminal of the first type does not monitor MBS.

It should be noted that those skilled in the art can understand that the methods provided in the embodiments of the present disclosure may be executed independently, or together with some methods in the embodiments of the present disclosure or some methods in the related art.

As shown in FIG. 11, an embodiment of the present disclosure provides a method for monitoring MBS, where the method is executed by a terminal of a first type, and the method includes the following steps.

In step 111, in response to that the terminal of the first type monitors predetermined information on the initial DL BWP and an opportunity for monitoring MBS is reached, it is switched to monitor MBS on CFR.

Here, the terminal of the first type is a RedCap terminal in an RRC disconnected state.

In an embodiment, the terminal of the first type may receive configuration information sent by the network device, where the configuration information indicates a predetermined resource. The predetermined resource includes CFR and/or initial DL BWP, and the terminal compares the initial DL BWP and CFR. In an embodiment, in response to the initial DL BWP not including the CFR, the terminal of the first type may still monitor the MBS.

In an embodiment, in response to the terminal of the first type monitoring a paging message on the initial DL BWP and an opportunity to monitor MBS being reached, it is switched to monitor MBS on CFR. In response to an end of monitoring MBS on the CFR, it is switched to monitor the paging message on the initial DL BWP.

In an embodiment, in response to the terminal of the first type monitoring the random access message on the initial DL BWP and an opportunity for monitoring MBS being reached, it is switched to monitor MBS on CFR. In response to the end of monitoring MBS on the CFR, it is switched to monitor the random access message on the initial DL BWP.

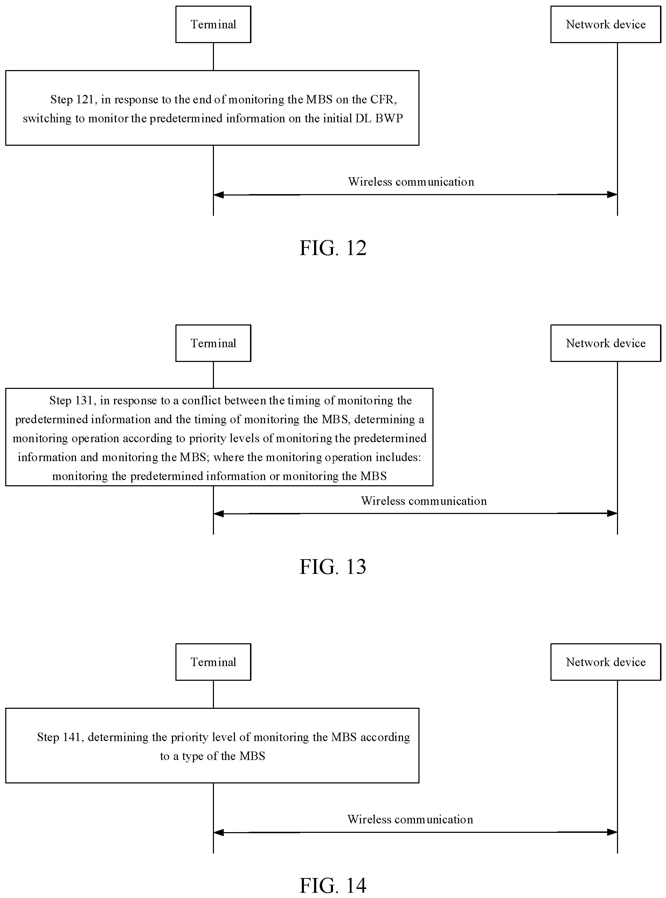

Further, after step 111 is executed, as shown in FIG. 12, the method also includes:

step 121, in response to the end of monitoring the MBS on the CFR, switching to monitor the predetermined information on the initial DL BWP.

It should be noted that those skilled in the art can understand that the methods provided in the embodiments of the present disclosure may be executed independently, or together with some methods in the embodiments of the present disclosure or some methods in the related art.

As shown in FIG. 13, an embodiment of the present disclosure provides a method for monitoring an MBS, where the method is performed by a terminal of a first type, and the method includes the following steps.

In step 131, in response to a conflict between an opportunity for monitoring predetermined information and an opportunity for monitoring the MBS, a monitoring operation is determined according to priority levels of monitoring the predetermined information and monitoring the MBS;
where the monitoring operation includes: monitoring the predetermined information or monitoring the MBS.

Here, the terminal of the first type is a RedCap terminal in an RRC disconnected state.

In an embodiment, the terminal of the first type may receive configuration information sent by the network device, where the configuration information indicates a predetermined resource. The predetermined resource includes CFR and/or initial DL BWP, and the terminal of the first type compares initial DL BWP and CFR. In an embodiment, in response to the initial DL BWP not including the CFR, the terminal of the first type may still monitor the MBS.

In an embodiment, in response to the opportunity for monitoring the predetermined information and the opportunity for monitoring the MBS being the same, the monitoring operation is determined according to the priority levels of monitoring the predetermined information and monitoring the MBS; where the monitoring operation includes: monitoring the predetermined information or monitoring the MBS.

In an embodiment, the priority level of monitoring the predetermined information and the priority level of monitoring the MBS are preset. In an embodiment, in response to that the opportunity for monitoring the predetermined information and the opportunity for monitoring the MBS conflict and the priority level of monitoring the predetermined information is higher than the priority level of monitoring the MBS, the predetermined information is monitored. It should be noted that "higher than" in the present disclosure has the meaning of "higher than or equal to" in a specific scenario.

In an embodiment, the priority level of monitoring the predetermined information and the priority level of monitoring the MBS are preset. In an embodiment, in response to that the opportunity for monitoring the predetermined information and the opportunity for monitoring the MBS conflict and the priority level of monitoring the predetermined information is lower than the priority level of monitoring the MBS, the MBS is monitored. It should be noted that "lower than" in the present disclosure has the meaning of "lower than or equal to" in a specific scenario.

Here, the predetermined information may be information carried in a paging message or a random access message.

Further, after step 131 is executed, as shown in FIG. 14, the method also includes:
step 141, determining the priority level of monitoring the MBS according to a type of the MBS.

That is, the priority level in step 131 may be determined through step 141 for example.

In an embodiment, in response to an importance parameter of the MBS being greater than a parameter threshold, it is determined that the priority level of monitoring the MBS is greater than a level threshold; or, in response to the importance parameter of the MBS being less than the parameter threshold, it is determined that the priority level of monitoring the MBS is less than the level threshold.

Exemplarily, if the MBS is an MBS of early warning information, and the importance parameter is greater than the parameter threshold, then the priority level of monitoring the MBS is greater than the level threshold. Here, it may be that the priority level of monitoring MBS is higher than that of monitoring the predetermined information. Here, the predetermined information may be information carried in a paging message or a random access message.

It should be noted that those skilled in the art can understand that the methods provided in the embodiments of the present disclosure may be executed independently, or together with some methods in the embodiments of the present disclosure or some methods in the related art.

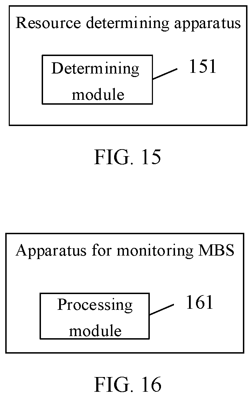

As shown in FIG. 15, a resource determining apparatus is provided in an embodiment of the present disclosure, where the apparatus includes:
a determining module 151, configured to determine a predetermined resource according to predetermined information;
where the predetermined information indicates: providing a multicast and broadcast service (MBS) to the terminal of the first type or not providing the MBS service to the terminal of the first type; the predetermined resource includes at least one of the following: a common frequency resource (CFR), or an initial downlink bandwidth part (DL BWP) used by the terminal of the first type.

It should be noted that those skilled in the art can understand that the determining module 151 described above may be configured to execute any one of the foregoing steps 21 to 71, which will not be repeated here.

As shown in FIG. 16, an embodiment of the present disclosure provides an apparatus for monitoring an MBS service, where the apparatus includes:
a processing module 161, configured to perform a processing operation for the MBS according to a configuration result of a predetermined resource;
where the predetermined resource includes at least one of the following: CFR, or initial DL BWP used by the terminal of the first type; the processing operation includes: monitoring MBS or not monitoring MBS.

It should be noted that those skilled in the art can understand that the above-mentioned processing module 161 may be configured to execute any one of the foregoing steps 81 to 141, which will not be repeated here.

An embodiment of the present disclosure provides a communication device, which includes:
a processor;
a memory for storing an executable instruction of the processor;
where the processor is configured to implement the method applied to any embodiment of the present disclosure when executing the executable instruction.

The processor may include various types of storage media, which are non-transitory computer storage media, and can continue to memorize and store information thereon after the communication device is powered off.

The processor may be connected to the memory through a bus or the like, and is used to read the executable program stored in the memory.

An embodiment of the present disclosure further provides a computer storage medium, where the computer storage medium stores an executable program of a computer, and when the executable program is executed by the processor, the method of any embodiment of the present disclosure is implemented.

Regarding the apparatus in the foregoing embodiments, the specific manner in which each module executes operations has been described in detail in the embodiments related to the method, and will not be described in detail here.

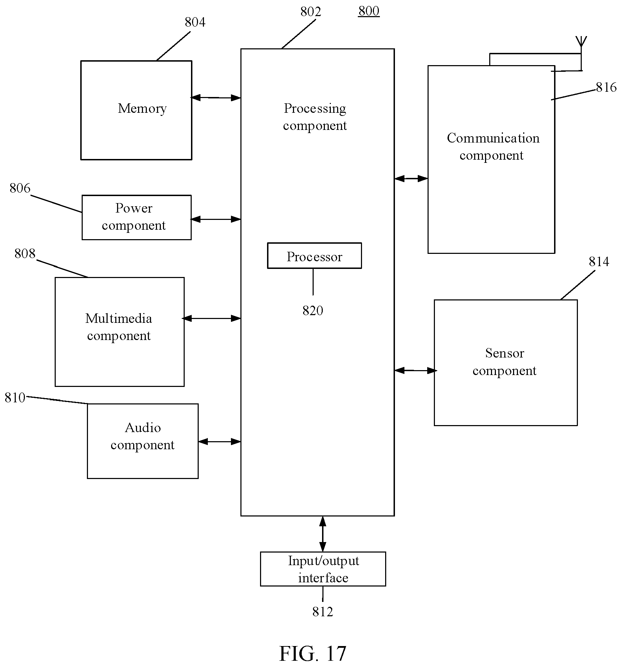

As shown in FIG. 17, an embodiment of the present disclosure provides a structure of the terminal.

Referring to the terminal 800 shown in FIG. 17, this embodiment provides the terminal 800, which specifically may be a mobile phone, a computer, a digital broadcast terminal, a messaging device, a gaming console, a tablet, a medical device, exercise equipment, a personal digital assistant, and the like.

Referring to FIG. 17, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the terminal 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the terminal 800, for performing the above-described methods. For example, the non-transitory computer-readable storage medium may be a ROM, a RAM, a CD-ROM, a magnetic tape, a floppy disc, an optical data storage device, and the like.

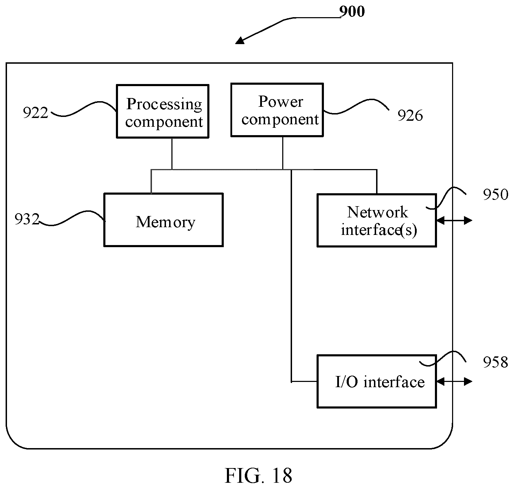

As shown in FIG. 18, an embodiment of the present disclosure shows a structure of a base station. For example, the base station 900 may be provided as a network side device. Referring to FIG. 18, the base station 900 includes a processing component 922, which further includes one or more processors, and a memory resource represented by a memory 932 for storing instructions executable by the processing component 922, such as application programs. The application program stored in the memory 932 may include one or more modules each corresponding to a set of instructions. In addition, the processing component 922 is configured to execute instructions, so as to perform any of the aforementioned methods applied to the base station.

The base station 900 may also include a power component 926 configured to perform power management of the base station 900, a wired or wireless network interface 950 configured to connect the base station 900 to a network, and an input-output (I/O) interface 958. The base station 900 can operate based on an operating system stored in the memory 932, such as Windows Server^{™}, Mac OS X^{™}, Unix^{™}, Linux^{™}, FreeBSD^{™} or the like.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and embodiments are considered as exemplary only, with a true scope and spirit of the present disclosure being indicated by the following claims.

The methods of the embodiments of the present disclosure may include at least one of the following.

### First method:

In an embodiment, on the network side, the network determines the configuration of CFR and/or RedCap initial DL BWP according to whether to provide the MBS service for the RedCap terminal. If the network determines to provide RedCap with the related MBS service, it needs to support that RedCap Initial DL BWP can include CFR or the UE bandwidth of the terminal can monitor Initial DL BWP or CFR at the same time. Otherwise, the network does not take the restriction into account when configuring.

In an embodiment, the terminal determines whether it needs to monitor the MBS service by comparing the configuration of the CFR and the configuration of the initial DL BWP. If the monitored Initial DL BWP cannot cover the CFR or the UE bandwidth of the terminal cannot monitor the Initial DL BWP or CFR at the same time, then the terminal does not monitor the MBS at this time.

### Second method:

In an embodiment, the network side determines whether the initial DL BWP contains the first CFR or the UE bandwidth of the terminal can monitor the Initial DL BWP or CFR at the same time by comparing the positions of the RedCap initial DL BWP and the first CFR. If the condition cannot be met, the network can configure a second CRF for RedCap at this time. The second CFR needs to be included in the RedCap initial DL BWP or it is ensured that the second CRF and RedCap initial DL BWP are within the UE bandwidth of redCap.

In an embodiment, at the terminal side, it is determined whether there is a second CFR for RedCap. The MBS service is received on the second CFR.

### Third method:

In an embodiment, the RedCap terminal receives the MBS and monitors messages (such as paging, RACH) in the idle/inactive through BWP switching. Specifically, the terminal needs to switch to the CFR resource at the opportunity of needing to receive the MBS. After completing the receiving, the terminal switches back to the initial DL BWP to receive information.

In an embodiment, when a conflict occurs between the terminal receives MBS and receives information in idle/inactive state such as paging, RACH, etc.:
in an embodiment, a reception priority is defined, e.g. reception of MBS always has a low priority,
in an embodiment, the terminal determines the priority according to the type of the MBS service. For example, if the MBS service of early warning information is subscribed, then the MBS service is given priority.

It should be understood that the present disclosure is not limited to the precise constructions which have been described above and shown in the accompanying drawings, and various modifications and changes may be made without departing from the scope thereof. The scope of the present disclosure is limited only by the appended claims.

## Claims

1. A resource determining method, wherein the method is performed by a network device, and the method comprises:
determining a predetermined resource according to predetermined information;
wherein the predetermined information indicates: providing a multicast and broadcast service (MBS) to a terminal of a first type or not providing the MBS service to the terminal of the first type; and the predetermined resource comprises at least one of: a common frequency resource (CFR), or an initial downlink bandwidth part (DL BWP) used by the terminal of the first type.

2. The method according to claim 1, wherein determining the predetermined resource according to the predetermined information comprises:
in response to providing the MBS to the terminal of the first type, determining that the CFR is comprised in the initial DL BWP;
or,
in response to providing the MBS to the terminal of the first type, determining that the initial DL BWP and the CFR are within a bandwidth supported by the terminal of the first type.

3. The method according to claim 1, wherein determining the predetermined resource comprises:
determining a configuration operation for a CFR used by the terminal of the first type according to a time-frequency domain position relationship between the initial DL BWP and a CFR used by a terminal of a second type;
wherein the time-frequency domain position comprises a time domain and/or frequency domain position; a capability of the terminal of the second type is different from a capability of the terminal of the first type; the CFR used by the terminal of the first type is comprised in the initial DL BWP, or the CFR used by the terminal of the first type and the initial DL BWP are within a bandwidth supported by the terminal of the first type.

4. The method according to claim 3, wherein determining the configuration operation for the CFR used by the terminal of the first type according to the time-frequency domain position relationship between the initial DL BWP and the CFR used by the terminal of the second type, comprises:
in response to that the CFR used by the terminal of the second type is not comprised in the initial DL BWP, configuring the CFR used by the terminal of the first type;
or,
in response to that the CFR used by the terminal of the second type is comprised in the initial DL BWP, not configuring the CFR used by the terminal of the first type.

5. A method for monitoring an MBS service, wherein the method is performed by a terminal of a first type, and the method comprises:
performing a processing operation for the MBS according to a configuration result of a predetermined resource;
wherein the predetermined resource comprises at least one of: a CFR, or an initial DL BWP used by the terminal of the first type; and the processing operation comprises: monitoring the MBS or not monitoring the MBS.

6. The method according to claim 5, wherein performing the processing operation for the MBS according to the configuration result of the predetermined resource comprises:
in response to that the initial DL BWP comprises the CFR, monitoring the MBS;
or,
in response to that the initial DL BWP does not comprise the CFR, not monitoring the MBS;
or,
in response to that the initial DL BWP and the CFR are within a bandwidth supported by the terminal of the first type, monitoring the MBS;
or,
in response to that the initial DL BWP and the CFR are not within the bandwidth supported by the terminal of the first type, not monitoring the MBS.

7. The method according to claim 5, wherein performing the processing operation for the MBS according to the configuration result of the predetermined resource comprises:
in response to determining that a CFR used by the terminal of the first type is configured, monitoring the MBS based on the CFR used by the terminal of the first type;
wherein the CFR used by the terminal of the first type is comprised in the initial DL BWP, or the CFR used by the terminal of the first type and the initial DL BWP are within a bandwidth supported by the terminal of the first type.

8. The method according to claim 5, wherein monitoring the MBS comprises:
in response to that the terminal of the first type monitors predetermined information on the initial DL BWP and an opportunity for monitoring the MBS is reached, switching to monitor the MBS on the CFR.

9. The method according to claim 8, further comprising:
in response to an end of monitoring the MBS on the CFR, switching to monitor the predetermined information on the initial DL BWP.

10. The method according to claim 5, further comprising:
in response to a conflict between an opportunity for monitoring predetermined information and an opportunity for monitoring the MBS, determining a monitoring operation according to priority levels of monitoring the predetermined information and monitoring the MBS;
wherein the monitoring operation comprises: monitoring the predetermined information or monitoring the MBS.

11. The method according to claim 10, wherein determining the monitoring operation according to the priority levels of monitoring the predetermined information and monitoring the MBS comprises:
in response to that the priority level of monitoring the predetermined information is higher than the priority level of monitoring the MBS, monitoring the predetermined information;
or,
in response to that the priority level of monitoring the predetermined information is lower than the priority level of monitoring the MBS, monitoring the MBS.

12. The method according to claim 10, further comprising:
determining the priority level of monitoring the MBS according to a type of the MBS.

13. A resource determining apparatus, comprising:
a determining module, configured to determine a predetermined resource according to predetermined information;
wherein the predetermined information indicates: providing a multicast and broadcast service (MBS) to a terminal of a first type or not providing the MBS service to the terminal of the first type; and the predetermined resource comprises at least one of: a common frequency resource (CFR), or an initial downlink bandwidth part (DL BWP) used by the terminal of the first type.

14. An apparatus for monitoring an MBS service, comprising:
a processing module, configured to perform a processing operation for the MBS according to a configuration result of a predetermined resource;
wherein the predetermined resource comprises at least one of: a CFR, or an initial DL BWP used by a terminal; the processing operation comprises: monitoring the MBS or not monitoring the MBS.

15. A communication device, comprising:
a memory; and
a processor, connected to the memory and configured to implement the method according to any one of claims 1 to 4 or 5 to 12 by executing an executable instruction of a computer stored in the memory.

16. A computer storage medium, wherein the computer storage medium stores a computer-executable instruction, and the computer-executable instruction can implement the method according to any one of claims 1 to 4 or 5 to 12 after being executed by a processor.
